# EUROPÄISCHE PATENTANMELDUNG

(11) **EP 1 125 495 A2**
(43) Veröffentlichungstag der Anmeldung: **22.08.2001**
(21) Anmeldenummer: 01100226.8
(22) Anmeldetag: 03.01.2001
(51) Int. Cl.: A01K 5/02

(54) **Futterförderer**

(30) Priorität: 10.01.2000 DE 10000694
(71) Anmelder: Stallkamp, Erich, 49413 Dinklage (DE)
(72) Erfinder: Stallkamp, Erich, 49413 Dinklage (DE)
(74) Vertreter: Siekmann, Gunnar, Dipl.-Phys.

(57) **Zusammenfassung**

Ein Futterförderer, insbesondere für Geflügelstallanlagen, mit einer Antriebseinheit mit einem Motor und einem Getriebe mit zugehörigem Gehäuse wird dahingehend weitergebildet, daß wenigstens ein Teil des Gehäuses des Getriebes und ein daran anschließendes Bauteil einstückig ausgebildet sind. Dadurch ergibt sich eine Materialersparnis und eine leichtere Montage.

## Beschreibung

Die Erfindung betrifft einen Futterförderer, insbesondere für Geflügelstallanlagen, mit einer Antriebseinheit mit einem Motor und einem Getriebe mit zugehörigem Gehäuse.

Derartige Futterförderer werden beispielsweise zum Antrieb von Spiral- oder Schneckenantrieben eingesetzt, die das Futter durch ein Rohr ziehen und dabei unter dem Rohr angebrachte schüsselartige Futtertröge befüllen. In einer anderen bekannten Ausführungsform wird das Futter durch eine oben offene Rinne transportiert, wobei am Boden der Rinne eine Futterkette verläuft, die das Futter mit sich zieht, wobei die gesamte Rinne zur Fütterung zur Verfügung steht. Zum Antrieb der Futterkette ist eine Antriebseinheit vorgesehen, die mit einer Konsole über die Kette greift, in der ein Zahnrad oder ein anderes Antriebsmittel in die Kette eingreift und diese weiterbefördert.

Aus der DE 196 17 785 A1 ist eine Anordnung für Spiralförderanlagen bekannt.

Der Erfindung liegt die Aufgabe zugrunde, derartige Futterförderer dahingehend weiterzuentwickeln, daß diese besonders kostengünstig herstellbar und einfach montierbar sind. Zudem sollen besonders gute mechanische Eigenschaften erreicht werden.

Die Lösung dieser Aufgabe erfolgt mit einem Futterförderer mit den Merkmalen des Patentanspruchs 1. Vorteilhafte Weiterbildungen der Erfindung sind in den Unteransprüchen angegeben.

Nach dem Grundgedanken der Erfindung ist der Futterförderer mit einer Antriebseinheit mit einem Motor und einem Getriebe mit zugehörigem Gehäuse derart ausgebildet, daß wenigstens ein Teil des Gehäuses des Getriebes und ein daran anschließendes Bauteil einstückig ausgebildet sind. Dadurch wird eine Materialeinsparung erreicht, da in der Regel eine sonst doppelt gebildete Wandung entfällt und auch die Montage wird erheblich erleichtert. Zudem ist durch die einstückige Ausbildung eines Teils des Getriebegehäuses und des sich daran anschließenden Bauteils eine besonders gute Paßgenauigkeit und Festigkeit gewährleistet, so daß eine genaue und aufwendige Montage des an das Getriebe anschließenden Bauteils entfällt. Durch die einstückige Ausbildung dieser Bauteile entfällt auch das Problem, daß sich die am Getriebe befestigten Teile durch ständige Motorvibrationen lösen können.

In einem besonders bevorzugten Anwendungsfall weist der Futterförderer einen Spiralantrieb zur Förderung von Futter auf, und zum Anschluß des Spiralantriebes an das Getriebe ist ein Adapter vorgesehen. Ein derartiger Adapter ist notwendig, um die Durchmesserdifferenz zwischen dem Getriebegehäuse und dem daran anzuschließenden Rohr mit dem Spiralantrieb zu überbrücken. Alternativ kann auch ein Schneckenantrieb oder ein anderer Antrieb zur Anwendung kommen. Weiterhin ist in dem Adapter ein Gitter vorgesehen, durch das bis zu dem Motor gezogenes Futter, das nicht wie vorgesehen in die verschiedenen Aufnahmetröge gefallen ist, austreten kann.

Bei einer solchen Ausführungsform sind bevorzugt der Adapter und das Getriebegehäuse einstückig ausgebildet. Alternativ ist es besonders günstig, den Adapter und einen Getriebedeckel einstückig auszubilden, da dadurch das Getriebe in herkömmlicher Weise montiert werden kann und durch die Montage des Getriebedeckels gleichzeitig auch der Adapter paßgenau ausgerichtet ist und sich nicht vom Getriebe lösen kann. Zudem wird eine Materialersparnis erreicht, da eine Seitenwand des Adapters eingespart wird.

In einem anderen bevorzugten Anwendungsbeispiel weist der Futterförderer eine Futterkette zur Förderung von Futter auf, die im Bereich der Antriebseinheit durch eine Konsole geführt ist. Besonders bevorzugt sind das Getriebegehäuse und die Konsole einstückig ausgebildet. Dadurch ist ein Bauteil weniger zu montieren und auszurichten.

In einer anderen Weiterbildung der Erfindung ist dem Motor ein Klemmkasten zur Aufnahme von Schaltungen und ein Schütz zugeordnet. Dabei ist der Klemmkasten bevorzugt so groß ausgebildet, daß der Schütz in dem Klemmkasten anordbar ist. Der Klemmkasten dient also zur Aufnahme des Schützes und der elektrischen Schaltung. In einer bevorzugten Ausführungsform erstreckt sich der Klemmkasten im wesentlichen über die gesamte Länge des Motors. Auf diese Weise wird ein zusätzlicher Kasten für den Schütz und eine weitere Verkabelung eingespart. Insgesamt wird dadurch die Herstellung verbilligt und die Montage vereinfacht.

In einer anderen Weiterbildung der Erfindung ist das Gehäuse bevorzugt aus Aluminium-Druckguß hergestellt. Grundsätzlich sind jedoch auch andere Materialien verwendbar. Insbesondere sind andere Metalle, aber auch besonders feste Kunststoffe einsetzbar.

Nachfolgend wird die Erfindung anhand von in der Zeichnung dargestellten bevorzugten Ausführungsbeispielen weiter erläutert. Im einzelnen zeigen die schematischen Darstellungen in:
- Fig. 1:: eine geschnittene Seitenansicht eines Futterförderers mit einem Spiralantrieb;
- Fig. 2:: eine Draufsicht auf einen Futterförderer gemäß Fig. 1 und
- Fig. 3:: eine geschnittene Draufsicht auf einen Futterförderer mit einer Futterkette.

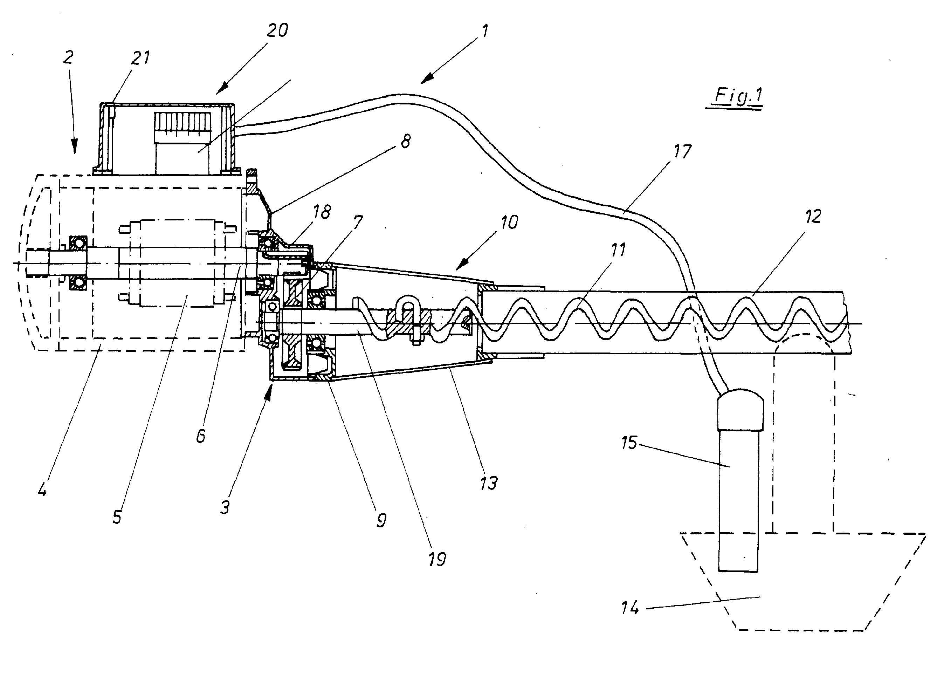

In Fig. 1 ist eine geschnittene Seitenansicht eines Futterförderers 1 dargestellt, der einen Motor 2, ein Getriebe 3 und einen Adapter 10 aufweist. An den Adapter 10 ist ein Rohr 12 angeschlossen, in dem mit Hilfe eines Spiralantriebes 11 Futter befördert wird. Das Futter wird dabei durch das Rohr 12 in Richtung des Motors 2 gezogen und wird dabei durch Ausnehmungen in dem Rohr 12 in Futterschalen 14 abgegeben. Wenn die letzte vor dem Motor 2 angeordnete Futterschale 14 gefüllt ist, so wird dies durch den Sensor 15 festgestellt und über ein Kabel 17 an den Motor gemeldet, so daß dieser dann abschaltet. Der Motor 2 weist einen Elektromotor 5 auf, der eine Motorwelle 6 antreibt und von einem Motorgehäuse 4 umgeben ist. An dem Motorgehäuse 4 ist ein Getriebegehäuse 18 befestigt, das in einen Motorlagerschild 8 übergeht. In dem Getriebegehäuse 18 ist ein einstufiges Getriebe 7 angeordnet. Diese Teile bilden zusammen mit dem Getriebedeckel 9 das Getriebe 3. Der Getriebedeckel 9 ist einstückig mit dem Adapter 13 ausgebildet, so daß der Adapter 13 zusammen mit dem Getriebedeckel 9 an dem übrigen Getriebegehäuse 18 befestigt wird. In dem Adapter 13 ist auf einer Getriebewelle 19 der Spiralantrieb 11 befestigt. Der Adapter 13 ist sich verjüngend ausgebildet, um die unterschiedlichen Querschnitte des Getriebes 3 und des Rohres 12 auszugleichen. Im Bereich des sich verjüngenden Endes des Adapters 13 wird das Rohr 12 formschlüssig angeschlossen. Auf der Oberseite des Motors 2 ist ein Klemmkasten 20 angeordnet, der auf dem Motorgehäuse 4 angeschraubt wird. Der Klemmkasten 20 ist so groß ausgebildet und erstreckt sich dabei fast über die gesamte Länge des Motors, daß neben den Schaltungen ein Schütz 22 in dem Klemmkasten angeordnet werden kann.

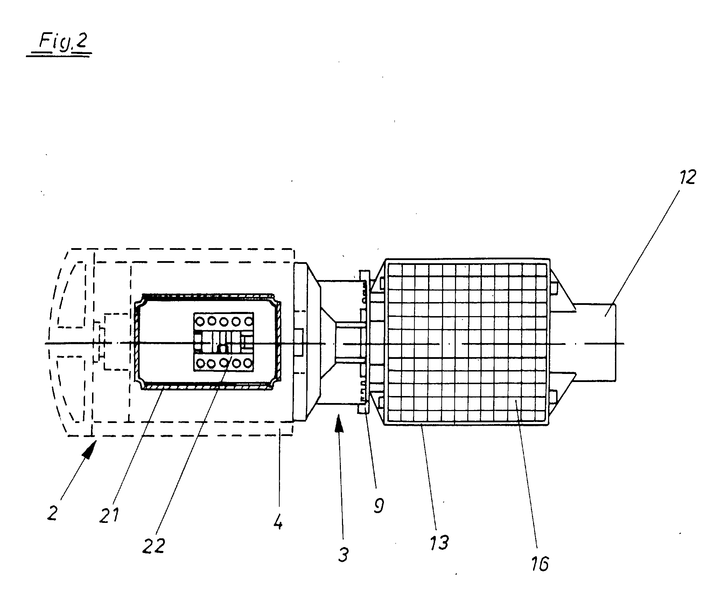

In Fig. 2 ist eine Draufsicht auf den Futterförderer gemäß Fig. 1 dargestellt. In der Draufsicht ist insbesondere das auf dem Motor 2 angeordnete Gehäuse 21 des Klemmkastens mit dem darin angeordneten Schütz 22 zu sehen. Das Getriebe schließt an das Motorgehäuse 4 an und wird von dem Getriebedeckel 9 am rechten Rand verschlossen, wobei der Getriebedeckel 9 einstückig mit dem sich daran anschließenden Adapter 13 ausgebildet ist. Der Adapter 13 weist an seiner Oberseite einen durchlässigen Rost 16 auf, durch den eventuell bis in den Adapter 13 gefördertes Futter austreten kann.

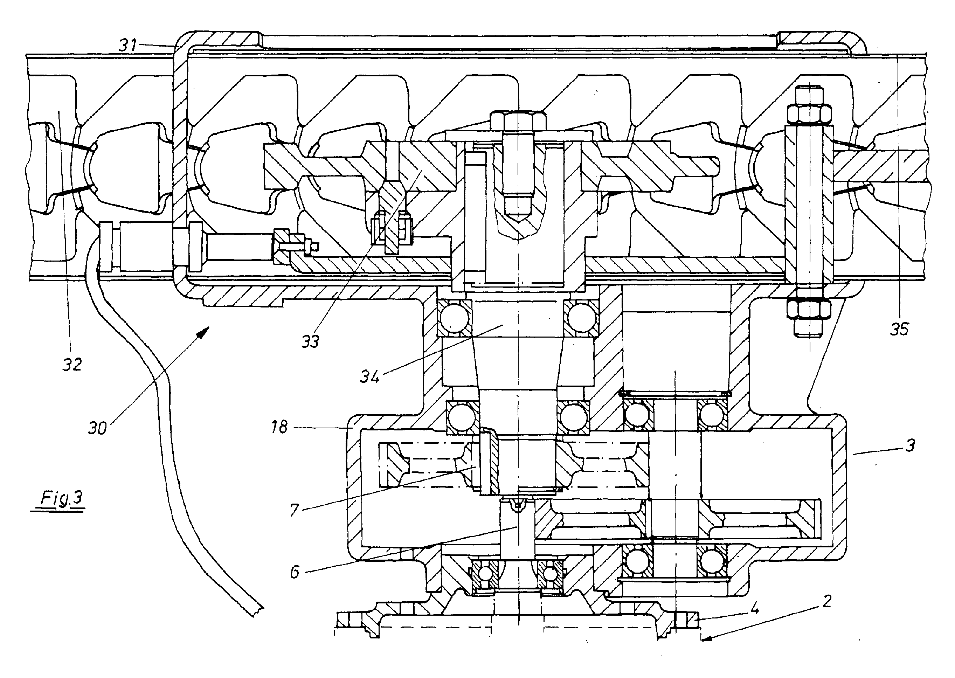

In Fig. 3 ist eine geschnittene Draufsicht auf ein weiteres Ausführungsbeispiel eines Futterförderers dargestellt. Bei diesem Futterförderer wird in einer Rinne 35 Futter mit Hilfe einer Futterkette 32 transportiert. Die oben offene Rinne 35 verläuft durch ein Stallgebäude, so daß den Tieren in einem großen Bereich Futter zur Verfügung steht. Zum Antrieb der Futterkette 32 dient ein sich drehendes Rad 33, das in die Futterkette 32 eingreift und diese fortbewegt. Das Rad 33 wird von dem am unteren Bildrand befindlichen Motor 2 und ein Getriebe angetrieben. Der Motor 2 weist einen Gehäusedeckel 4 auf, durch den eine Motorwelle 6 durchtritt. Die Motorwelle 6 wird vom Getriebegehäuse 18 aufgenommen, in dessen Inneren sich das eigentliche Getriebe 7 befindet. Die Getriebewelle 34 treibt das Zahnrad 33 an, das in einer Konsole 30 mit einem Gehäuse 31 gehalten ist. In der Konsole 30 wird die Futterkette 32 geführt, so daß eine präzise Führung des Antriebs gewährleistet ist. Das Konsolengehäuse 31 und das Getriebegehäuse 18 sind einstückig ausgebildet, wodurch erreicht wird, daß bei der Produktion eine Materialersparnis erreicht wird und bei der Montage nur ein Teil montiert und ausgerichtet werden muß.

## Patentansprüche

1. Futterförderer, insbesondere für Geflügelstallanlagen, mit einer Antriebseinheit (1) mit einem Motor (2) und einem Getriebe (3) mit zugehörigem Gehäuse,
**dadurch gekennzeichnet,**
daß wenigstens ein Teil des Gehäuses (9, 18) und ein daran anschließendes Bauteil (10, 30) einstückig ausgebildet sind.

2. Futterförderer nach Anspruch 1, dadurch gekennzeichnet, daß der Futterförderer einen Spiralantrieb (11) zur Förderung von Futter aufweist und daß zum Anschluß des Spiralantriebs (11) an das Getriebe (3) ein Adapter (10) vorgesehen ist.

3. Futterförderer nach Anspruch 2, dadurch gekennzeichnet, daß der Adapter (10) und das Getriebegehäuse (18) einstückig ausgebildet sind.

4. Futterförderer nach Anspruch 2, dadurch gekennzeichnet, daß der Adapter (10) und ein Getriebedeckel (9) einstückig ausgebildet sind.

5. Futterförderer nach Anspruch 1, dadurch gekennzeichnet, daß der Futterförderer eine Futterkette (32) zur Förderung von Futter aufweist, die im Bereich der Antriebseinheit (1) durch eine Konsole (30) geführt ist.

6. Futterförderer nach Anspruch 5, dadurch gekennzeichnet, daß ein Getriebegehäuse (18) und die Konsole (30), insbesondere das Gehäuse (31) der Konsole (30), einstückig ausgebildet sind.

7. Futterförderer nach einem der vorhergehenden Ansprüche,
dadurch gekennzeichnet, daß dem Motor (2) ein Klemmkasten (20) zur Aufnahme von Schaltungen und ein Schütz (22) zugeordnet sind.

8. Futterförderer nach Anspruch 7, dadurch gekennzeichnet, daß der Klemmkasten (20) so groß ausgebildet ist, daß der Schütz (22) in dem Klemmkasten (20) anordbar ist.

9. Futterförderer nach einem der Ansprüche 7 oder 8, dadurch gekennzeichnet, daß sich der Klemmkasten (20) im wesentlichen über die gesamte Länge des Motors (2) erstreckt.

10. Futterförderer nach einem der vorhergehenden Ansprüche, dadurch gekennzeichnet, daß das Gehäuse aus Aluminium-Druckguß hergestellt ist.
